# EUROPÄISCHE PATENTANMELDUNG

(11) **EP 0 859 305 A2**
(43) Veröffentlichungstag der Anmeldung: **19.08.1998**
(21) Anmeldenummer: 98100910.3
(22) Anmeldetag: 20.01.1998
(51) Int. Cl.: G06F 1/16

(54) **Stützeinrichtung für ein Gerätegehäuse**

(30) Priorität: 18.02.1997 DE 19706267
(71) Anmelder: Siemens Nixdorf Informationssysteme AG, 33106 Paderborn (DE)
(72) Erfinder: Hesselbach, Udo, 33142 Büren (DE)
(74) Vertreter: Epping, Wilhelm, Dr.-Ing.

(57) **Zusammenfassung**

Stützeinrichtung (10) für ein in seiner Neigung verstellbares, etwa quaderförmiges Gehäuse (40) mit einem C-förmig gebogenen, sich über die Rückseite des Gehäuses (40) erstreckenden Stützbügel (12). Dessen unteres Ende ist in Richtung des oberen Endes abgebogen und hinter der Biegekante (18) ist eine erste Stützlinie (34) auf einer Aufstellfläche (38) ausgebildet. Eine zweite Stützlinie (36) bildet ein stabförmiger Stützfuß (20), welcher entlang des Stützbügels (12) verschieblich und in jeder Verschiebeposition an diesem feststellbar ist.

## Beschreibung

Die Erfindung betrifft eine Stützeinrichtung für ein etwa quaderförmiges Gerätegehäuse insbesondere eines Sichtgerätes oder eines Personal Computers nach dem Oberbegriff des Anspruchs 1.

Eine Bildschirmstütze der genannten Art ist aus der DE 33 01 467 A1 bekannt. Es ist eine Stützfuß mit einer gegenüber der Horizontalen schwenkbaren Tragplatte für das Bildschirmgehäuse beschrieben. Der Stützfuß belegt eine große Stellfläche auf einem Arbeitstisch, ist aufwendig und damit teuer.

In dem Deutschen Gebrauchsmuster DE 82 10 589 U1 wird eine Stützeinrichtung vorgeschlagen, die diese Nachteile vermeidet. Dazu ist in den rückwärtigen Bereich des Bildschirmgehäuses ein Stützfuß eingebaut, der mit Hilfe eines Spindeltriebs mehr oder weniger weit aus der Unterseite des Gehäuses herausgefahren werden kann. Diese Anordnung läßt nur einen relativ kleinen Verstellwinkel zu.

Aufgabe der Erfindung ist es, eine platzsparende Stützeinrichtung vorzuschlagen, die es mit einfachen Mitteln gestattet, den Neigungswinkel eines Gehäuses in weiten Grenzen zu verändern.

Die Aufgabe wird durch die im Kennzeichen des Anspruchs 1 genannten Merkmale gelöst.

Die Erfindung geht von der Überlegung aus, daß der Neigungswinkel eines solchen Gehäuses in weiten Grenzen, über 45° hinaus, verändert werden kann, wenn man auf der Rückseite des Gehäuses einen C-förmig gebogenen, von der Ober- bis zur Unterkante der Gehäuserückwand reichenden Stützbügel anbringt, dessen unteres Ende etwa rechtwinklig in Richtung des oberen Endes abgebogen ist und dessen unterer Flächenbereich hinter der Biegekante von einer ersten Stützlinie auf einer Aufstellfläche durchsetzt wird. Eine zweite Stützlinie kann dann ein stabförmiger Stützfuß bilden, welcher entlang des Stützbügels verschieblich und in jeder Verschiebeposition an diesem feststellbar ist. Die zweite Stützlinie wandert bei zunehmendem Neigungswinkel mit dem sich von der ersten Stützlinie entfernenden Schwerpunkt mit, so daß bei jeder Neigung eine hohe Standfestigkeit gewährleistet ist.

Vorzugsweise ist der Stützbügel als relativ zur Gehäusebreite schmaler, im Bereich der Biegekante verbreiterter Metallstreifen ausgebildet. Dadurch bleibt der Platzbedarf hinter dem Gehäuse gering, aber eine breite Stützbasis bleibt erhalten.

In Weiterbildung der Erfindung umfaßt der Stützfuß zwei erste Teilstäbe, deren jeder von einer koaxialen Bohrung durchsetzt ist und in deren dem anderen ersten Teilstab zugekehrte Fläche neben der Bohrung ein axial ausgerichteter Schlitz eingeformt ist, der den Stützbügel von einer Seite her mit geringem Spiel zu umfassen vermag. Die Schlitze beider erster Teilstäbe haben dabei vorzugsweise zusammen eine Tiefe, die um einen oder wenige mm geringer als die Breite des Stützbügels ist. Des weiteren sind zwei zweite Teilstäbe vorgesehen, in deren eines Ende eine koaxiale Gewindebohrung eingelassen ist.

Zur Montage des Stützfußes wird je ein erster Teilstab mit seinem Schlitz auf eine der beiden Seitenkanten des Stützbügels aufgesteckt. Darauf wird in die koaxialen Bohrungen der ersten Teilstäbe eine Gewindestange eingesteckt und auf deren über die ersten Teilstäbe überstehende Enden je ein zweiter Teilstab aufgeschraubt. Je nach Festigkeit dieser Verschraubung ist der Stützfuß auf dem Stützbügel verschieblich oder er wird zwischen den beiden ersten Teilstäben unverrückbar festgeklemmt. Damit kann der Neigungswinkel stufenlos eingestellt und durch Festschrauben der zweiten Teilstäbe zuverlässig beibehalten werden.

Um ein Verkratzen der Aufstellfläche zu vermeiden, hat der Stützfuß gemäß einer weiteren Ausprägung der Erfindung einen kreisförmigen oder ovalen Querschnitt und seine Enden sind abgerundet. Im Sinne einer rationellen Fertigung sind zumindest die zweiten Teilstäbe jeweils gleich ausgebildet.

Die folgende Beschreibung erläutert in Verbindung mit den beigefügten Zeichnungen die Erfindung an Hand eines Ausführungsbeispiels. Es zeigt:
- Fig. 1: eine Stützeinrichtung in einer perspektivischen Vorderansicht,
- Fig. 2: die Stützeinrichtung mit Gehäuse in Seitenansicht in einer ersten Neigungsposition,
- Fig. 3: die Stützeinrichtung mit Gehäuse in Seitenansicht in einer zweiten Neigungsposition,
- Fig. 4: einen mit der Stützeinrichtung versehenen Personal Computer in perspektivischer Ansicht.

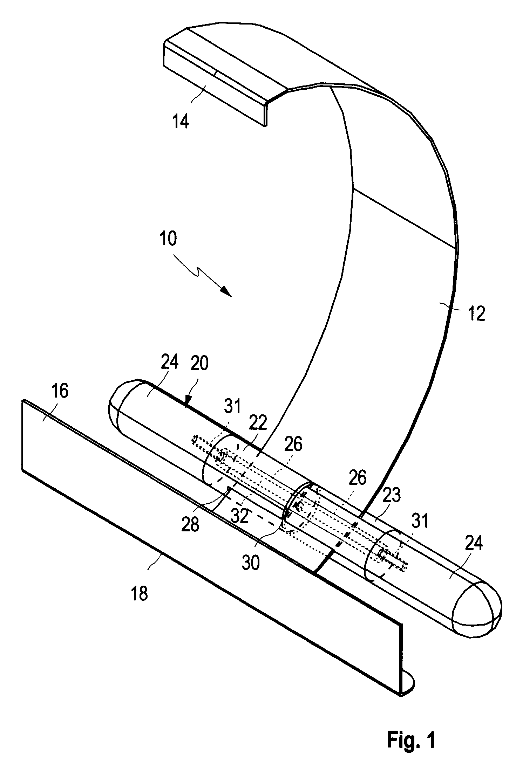

In Fig. 1 ist eine erfindungsgemäße Stützeinrichtung allgemein mit 10 bezeichnet. Diese umfaßt einen aus einem Metallstreifen gebildeten C-förmig gebogenen Stützbügel 12, an dessen oberes Ende eine nach unten abgebogene obere Montagefläche 14 angeformt ist. Das untere Ende des Stützbügels 12 ist verbreitert und in Richtung der oberen Montagefläche 14 zu einer unteren Monagefläche 16 aufgebogen. Der untere Flächenbereich hinter der Biegekante 18 wird von einer ersten Stützlinie 34 durchsetzt.

Eine zweite Stützlinie 36 wird durch einen stabförmigen Stützfuß 20 mit rundem Querschnitt gebildet. Dieser besteht aus zwei spiegelbildlich zueinander geformten ersten Teilstäben 22, 23 und zwei zweiten Teilstäben 24, die gleich ausgebildet sind. Die ersten Teilstäbe 22, 23 sind von einer koaxialen Bohrung 26 durchsetzt und in ihre dem anderen ersten Teilstab 22 bzw. 23 zugekehrte Fläche ist neben der Bohrung 26 ein axial ausgerichteter Schlitz 28 eingeformt, der den Stützbügel 12 von einer Seite her mit geringem Spiel zu umfassen vermag. Die Tiefe der Schlitze 28 ist so gewählt, daß ihre Tiefe insgesamt um ein geringes Maß, vorzugsweise ein bis einige mm, geringer als die Breite des Stützbügels 12 ist. Zwischen beiden ersten Teilstäben 22, 23 bildet sich also ein Spalt 30 aus. Die zweiten Teilstäbe 24 sind mit einer koaxialen Gewindebohrung 31 versehen.

Zur Montage des Stützfußes 20 an dem Stützbügel 12 wird je ein erster Teilstab 22 bzw. 23 mit seinem Schlitz 28 auf eine der beiden Seitenkanten des Stützbügels 12 aufgesteckt. Dann wird in die koaxialen Bohrungen 26 der ersten Teilstäbe 22, 23 eine Gewindestange 32 eingesteckt und auf deren über die ersten Teilstäbe 22 bzw. 23 überstehenden Enden je ein zweiter Teilstab 24 aufgeschraubt.

Je nach der Festigkeit dieser Schraubverbindung ist der Stützfuß 20 auf dem Stützbügel 12 verschieblich, oder er wird zwischen den beiden ersten Teilstäben 22, 23 unverrückbar festgeklemmt, weil die Grundflächen der Schlitze 28 die Seitenkanten des Stützbügels zwischen sich einklemmen. Der Spalt 30 nimmt dabei Toleranzen der Stützbügel-Breite und der Schlitztiefe auf.

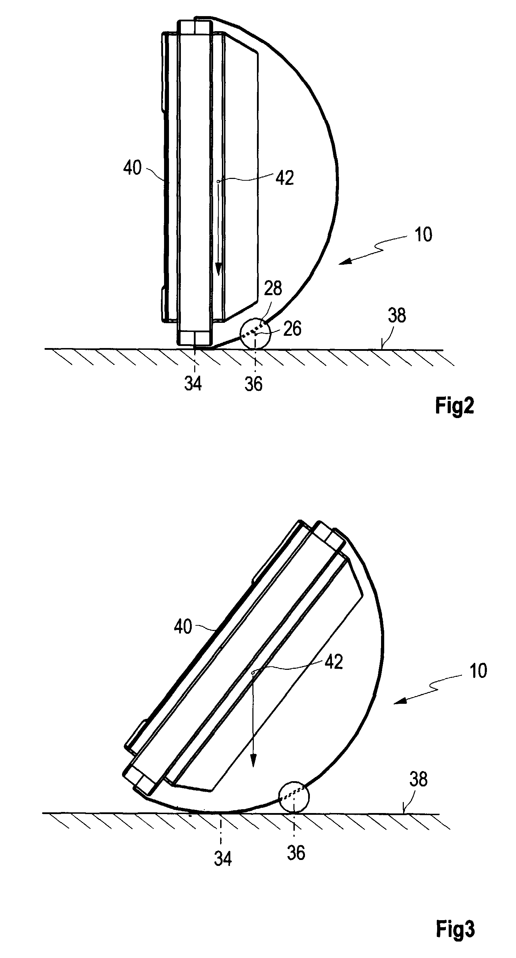

In den Fig. 2 und 3 ist die Stützeinrichtung 10 mit auf der oberen und unteren Montagefläche 14, 16 befestigtem, z.B. angeschraubtem Gehäuse 40 in verschiedenen Neigungspositionen dargestellt. Die Stützeinrichtung 10 stützt sich auf der ersten, durch den der Biegekante 18 nahen Flächenbereich laufenden Stützlinie 34 und der zweiten, durch den Stützfuß realisierten Stützlinie 36 auf der Aufstellfläche 38 ab. Es ist zu erkennen, daß die erste Stützlinie 34 bei zunehmendem Neigungswinkel nach hinten wandert und die zweite Stützlinie 36 mit dem sich von der ersten Stützlinie 34 entfernenden Schwerpunkt 42 mitwandert, so daß bei jeder Neigung eine hohe Standfestigkeit der gesamten Anordnung gewährleistet ist.

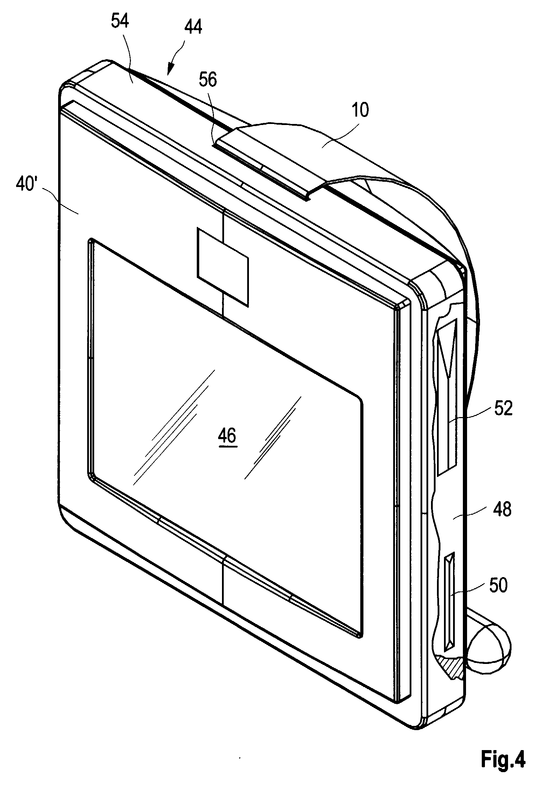

In Fig. 4 ist ein mit der erfindungsgemäßen Stützeinrichtung 10 ausgestatteter Personal Computer 44 in einer aufrechten Position dargestellt. In die Frontseite des Gehäuses 40' ist ein flacher Bildschirm 46 und in eine Seitenfläche 48 ein Schacht 50 für Karten beispielsweise nach dem PCMCIA-Standard und ein Diskettenlaufwerk 52 eingelassen.

Das Gehäuse 40' ist seitlich, oben und unten von einem Rahmen 54 umgeben, in den oben und unten eine schlitzförmige Ausnehmung 56 (nur die obere Ausnehmung ist sichtbar) eingelassen ist. In die Ausnehmungen 56 ist die obere 14 bzw. die untere Montagefläche 16 mit ihrem freien Ende einrastbar, wozu der -elastische- C-förmige Stützbügel 12 vorübergehend aufgebogen wird.

## Patentansprüche

1. Stützeinrichtung (10) für ein etwa quaderförmiges Gerätegehäuse (40) insbesondere eines flachen Sichtgerätes oder eines Personal Computers, die eine Verstellung der Gehäuseneigung gegenüber einer Aufstellfläche (38) gestattet,
**gekennzeichnet durch**
einen C-förmig gebogenen, sich von oben nach unten über die Rückseite des Gehäuses (40) erstreckenden Stützbügel (12), an dessen Enden am Gehäuse (40) anzubringende Montageflächen (14, 16) ausgebildet sind, wobei das untere Ende in Richtung des oberen Endes abgebogen ist und ein unterer, sich an die Biegekante (18) anschließender Flächenbereich von einer ersten Stützlinie (34) auf einer Aufstellfläche (38) durchsetzt ist,
und einen eine zweite Stützlinie (36) bildenden stabförmigen Stützfuß (20), welcher entlang des Stützbügels (12) verschieblich und in jeder Verschiebeposition an diesem feststellbar ist.

2. Stützeinrichtung nach Anspruch 1, deren Stützbügel (12) als relativ zur Breite des Gehäuses (40) schmaler, im Bereich der Biegekante (18) verbreiterter Metallstreifen ausgebildet ist.

3. Stützeinrichtung nach Anspruch 1 oder 2, deren Stützfuß (20) zwei spiegelbildlich zueinander geformte erste Teilstäbe (22, 23) umfaßt, deren jeder von einer koaxialen Bohrung (26) durchsetzt ist und in deren dem anderen ersten Teilstab (22; 23) zugekehrte Fläche neben der Bohrung (26) ein axial ausgerichteter Schlitz (28) eingeformt ist, der den Stützbügel (12) von einer Seite her mit geringem Spiel zu umfassen vermag.

4. Stützeinrichtung nach Anspruch 3, bei der die Schlitze (28) beider erster Teilstäbe (22, 23) zusammen eine Tiefe haben, die um einen oder wenige mm geringer als die Breite des Stützbügels (12) ist.

5. Stützeinrichtung nach Anspruch 3 oder 4, bei der zwei zweite Teilstäbe (24) vorgesehen sind, in deren eines Ende eine koaxiale Gewindebohrung (31) eingelassen ist.

6. Stützeinrichtung nach Anspruch 5 und einem der Ansprüche 3 oder 4, deren zweite Teilstäbe (24) jeweils gleich ausgebildet sind.

7. Stützeinrichtung nach Anspruch 5 oder 6, bei der je ein erster Teilstab (22, 23) mit seinem Schlitz (28) auf eine der beiden Seitenkanten des Stützbügels (12) aufgesteckt ist,
in die koaxialen Bohrungen (26) der ersten Teilstäbe (22, 23) eine Gewindestange (32) eingesteckt ist, auf die über die ersten Teilstäbe (22, 23) überstehenden Enden der Gewindestange (32) je ein zweiter Teilstab (24) aufgeschraubt ist.

8. Stützeinrichtung nach einem der vorhergehenden Ansprüche, deren Stützfuß (20) einen kreisförmigen oder ovalen Querschnitt hat und/oder die freien Enden der zweiten Teilstäbe (24) abgerundet sind.

9. Gerätegehäuse (40'), welches zur Verbindung mit einer Stützeinrichtung (10) nach einem der vorhergehenden Ansprüche vorbereitet ist, in dessen Ober- und Unterseite eine schlitzförmige Ausnehmung (56) eingeformt ist, deren jede für das Einstecken einer Montagefläche (14, 16) bestimmt ist.

10. Gerätegehäuse nach Anspruch 9, welches oben, unten und seitlich von einem umlaufenden Rahmen (54) umgeben ist, in den die Ausnehmungen (56) eingeformt sind.
